# EUROPÄISCHE PATENTSCHRIFT

(11) **EP 0 863 050 B1**
(45) Veröffentlichungstag und Bekanntmachung des Hinweises auf die Patenterteilung: **26.03.2003**
(21) Anmeldenummer: 98101426.9
(22) Anmeldetag: 28.01.1998
(51) Int. Cl.: B60R 1/06

(54) **Aussenrückblickspiegel für Fahrzeuge, vorzugsweise für Kraftfahrzeuge**
Exterior rearview mirror for vehicles, preferable for motor vehicles
Rétroviseur extérieur pour véhicules, de préférence véhicules à moteur

(30) Priorität: 06.03.1997 DE 29704058 U
(43) Veröffentlichungstag der Anmeldung: 09.09.1998
(73) Patentinhaber: Schefenacker Vision Systems Germany GmbH & Co. KG, 73730 Esslingen (DE)
(72) Erfinder: Waldmann, Bernd, 73733 Esslingen (DE)
(74) Vertreter: Kohl, Karl-Heinz

(56) Entgegenhaltungen:
- DE-A- 4 204 621
- DE-A- 19 728 704
- DE-U- 9 314 023
- DE-U- 9 420 433
- DE-U- 29 610 374

## Beschreibung

Die Erfindung betrifft einen Außenrückblickspiegel für Fahrzeuge, vorzugsweise für Kraftfahrzeuge, nach dem Oberbegriff des Anspruches 1.

Bei einem bekannten Außenrückblickspiegel dieser Art (DE 296 10 374 U1) besteht das Spiegelgehäuse aus eingefärbtem thermoplastischen Kunststoff, der mit einem Lichtschutzmittel versehen ist.

Ein anderer bekannter Außenrückblickspiegel (DE 42 04 621 A1) weist ein Kunststoffgehäuse auf, das nach seiner Herstellung lackiert wird, um den Außenrückblickspiegel an die Wagenfarbe anzupassen. Da das Spiegelgehäuse Bereiche unterschiedlicher Wandstärken aufweist, tritt bei der Herstellung das Problem auf, daß Bereiche unterschiedlicher Dicke unterschiedlich schnell abkühlen und dadurch ein unterschiedliches Schrumpfverhalten haben. Daher entstehen nach Aushärtung des Kunststoffgehäuses Abweichungen von der vorgeschriebenen Oberflächenkonfiguration, die sich beim Lackieren des Gehäuses in Form von konkaven Abschnitten zeigen. Um diese Formungenauigkeiten auszugleichen, wird bei dem bekannten Auβenrückblickspiegel das Kunststoffspiegelgehäuse aus einer ersten und einer zweiten Kunststoffschicht hergestellt, wobei die zweite Kunststoffschicht dann aufgebracht wird, nachdem die erste Kunststoffschicht weitgehend abgekühlt ist. Die zweite Kunststoffschicht soll in der ersten Kunststoffschicht vorhandene Formungenauigkeiten ausgleichen. Das so hergestellte Kunststoffgehäuse wird danach lakkiert.

Der Erfindung liegt die Aufgabe zugrunde, einen Außenrückblickspiegel der eingangs genannten Art so auszubilden, daß bei einfacher und kostengünstiger Herstellung Beeinträchtigungen im Aussehen des Kunststoffes des Spiegelgehäuses vermieden werden.

Diese Aufgabe wird beim gattungsbildenden Außenrückblickspiegel erfindungsgemäß mit den kennzeichnenden Merkmalen des Anspruches 1 gelöst.

Zur Vermeidung von Verfärbungen des farbigen Kunststoffgehäuses des erfindungsgemäßen Außenrückblickspiegels wird das Gehäuse mit einem eine Außenschicht bildenden Überzug aus lichtbeständigem und transparentem Kunststoff versehen. Dadurch kann das Spiegelgehäuse selbst aus einem kostengünstigen, insbesondere eingefärbten Kunststoff gefertigt werden, so daß die Farbe des Außenrückblickspiegels an die Fahrzeugfarbe angepaßt werden kann. Der Überzug aus lichtbeständigem Kunststoff verhindert, daß der Kunststoff des Spiegelgehäuses Farbveränderungen erfährt. Der Überzug ist so dick, daß eine Farbveränderung des Kunststoffes des Spiegelgehäuses nicht zu befürchten ist. Vorzugsweise hat der Überzug eine Dicke von etwa 1 mm. Aufgrund des Überzuges kann für das Spiegelgehäuse preisgünstiges Material, beispielsweise ABS, Polycarbonat oder PBT, verwendet werden, das in jedem gewünschten Farbton eingefärbt werden kann. Lediglich der Überzug besteht aus dem lichtbeständigen, vorzugsweise dem UV-beständigen Material, das eine Farbveränderung des Kunststoffes des Spiegelgehäuses verhindert. Somit ist nur für den verhältnismäßig dünnen Überzug der teurere, lichtbeständige Kunststoff erforderlich, während im übrigen das kostengünstige, nicht lichtbeständige Kunststoffmaterial verwendet werden kann.

Weitere Merkmale der Erfindung ergeben sich aus den weiteren Ansprüchen, der Beschreibung und den Zeichnungen.

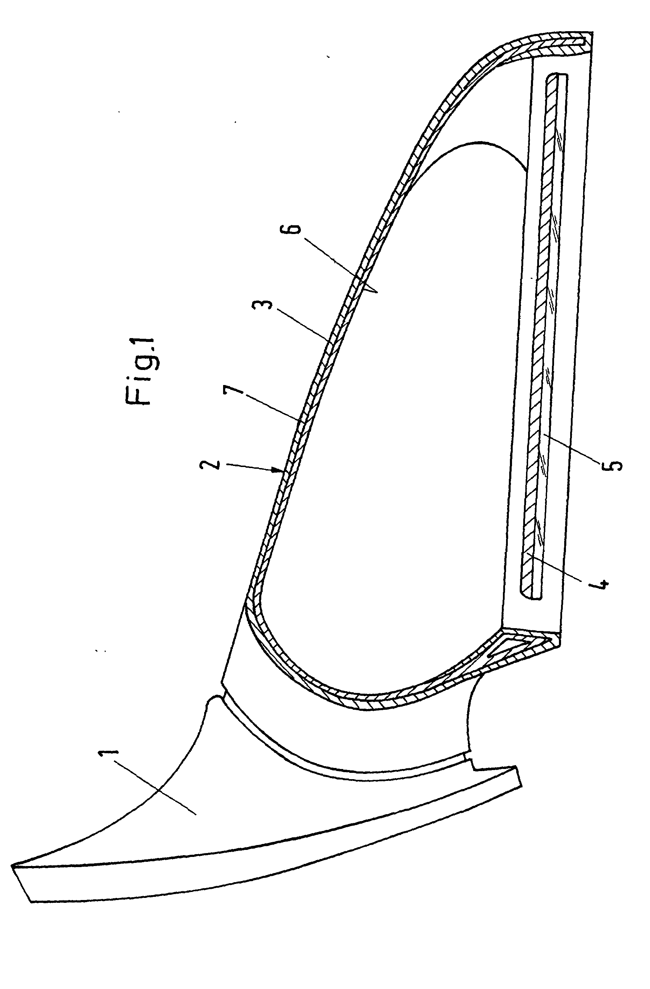

Die Erfindung wird anhand eines in den Zeichnungen dargestellten Ausführungsbeispieles näher erläutert. Es zeigen
- Fig. 1: einen Querschnitt durch einen erfindungsgemäßen Außenrückblickspiegel,

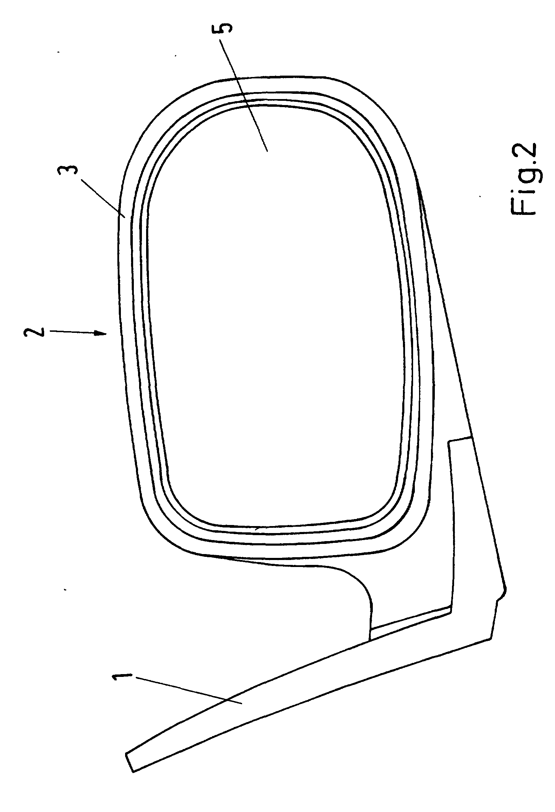

- Fig. 2: eine Ansicht des Außenrückblickspiegels gemäß Fig. 1.

Der Außenrückblickspiegel hat einen Spiegelfuß 1, mit dem er an einem Fahrzeug in bekannter Weise befestigt wird. Der Spiegelfuß 1 trägt einen Spiegelkopf 2, der gegenüber dem Spiegelfuß 1 in Fahrtrichtung nach vorn und hinten abklappbar ist. Der Spiegelkopf 2 hat ein Spiegelgehäuse 3, in dem in bekannter Weise eine Glasträgerplatte 4 verstellbar gelagert ist. Sie trägt ein Spiegelglas 5 und kann von Hand oder elektromotorisch verstellt werden.

Das Spiegelgehäuse 3 hat einen Grundkörper 6, der aus einem harten Kunststoff, vorzugsweise aus ABS (Acrylnitril-Butadien-Styrol-Copolymerisat), besteht. Der Kunststoff ist vorzugsweise eingefärbt, insbesondere in der Fahrzeugfarbe. Der Grundkörper 6 kann selbstverständlich auch aus einem anderen geeigneten Kunststoff im Spritzverfahren hergestellt werden, wie aus Polycarbonat oder aus Polybutylentherephthalat (PBT).

In einem zweiten Spritzvorgang wird die endgültige Form und Oberfläche des Spiegelgehäuses 3 auf den Grundkörper 6 gespritzt. Hierfür wird als Kunststoffmasse Polycarbonat, vorzugsweise PMMA (Polymethylmethacrylat), verwendet, die lichtbeständig, insbesondere UV-beständig, ist. Diese Kunststoffmasse bildet einen Überzug 7, mit dem der Grundkörper 6 auf seiner Außenseite vollständig bedeckt ist. Der Überzug 7 ist nur etwa 1 mm dick und ist durchsichtig, so daß der eingefärbte Grundkörper 6 sichtbar bleibt. Der Überzug 7 erstreckt sich bis zur Innenseite des Grundkörpers 6. Der Überzug 7 erstreckt sich so weit nach innen, daß auch bei maximal verstellter Glasträgerplatte 4 der Grundkörper 6 ohne Überzug nicht sichtbar ist.

Da der Überzug 7 aus licht-, insbesondere UV-beständigem Material besteht, kann der Grundkörper 6 aus einem kostengünstigeren Kunststoff hergestellt werden, der keine Licht- bzw. UV-Beständigkeit aufweisen muß. Dadurch kann das Spiegelgehäuse 3 äußerst kostengünstig gefertigt werden. Da sich der Überzug 7 in der beschriebenen Weise bis zur Innenseite des Spiegelgehäuses 3 erstreckt, ist gewährleistet, daß derjenige Bereich der Innenseite, an den Sonnenlicht gelangen kann, vor Verfärbungen und/oder Ausbleichungen geschützt ist.

Das Spiegelgehäuse 3 kann in nur zwei Arbeitsschritten gespritzt werden. Im ersten Spritzvorgang wird der Grundkörper 6 gespritzt, der nahezu die endgültige Form und Oberfläche des Spiegelgehäuses 3 aufweist. Nach ausreichendem Erkalten des Grundkörpers wird der Überzug 7 gespritzt, der die Endform des Spiegelgehäuses sowie die endgültige Oberfläche ergibt.

In gleicher Weise kann auch der Spiegelfuß 1 hergestellt werden. Er besteht ebenfalls aus einem Grundkörper, der aus einem kostengünstigen Kunststoff gefertigt werden kann, auf den der licht- bzw. UV-beständige Überzug aufgespritzt wird. Auch der Grundkörper des Spiegelkopfes 1 kann eingefärbt sein, insbesondere in der gleichen Farbe wie der Grundkörper 6 des Spiegelgehäuses 3. Der Überzug besteht wiederum aus Polycarbonat oder aus PMMA, das die erforderliche Licht- und UV-Beständigkeit hat.

## Patentansprüche

1. Außenrückblickspiegel für Fahrzeuge, vorzugsweise für Kraftfahrzeuge, mit einem Spiegelfuß (1), der mit einem Spiegelkopf (2) versehen ist, der ein Spiegelgehäuse hat, in dem eine Glasträgerplatte (4) untergebracht ist und das aus farbigem Kunststoff besteht,
**dadurch gekennzeichnet, daß** zumindest die Außenseite des Spiegelgehäuses (3) zur Vermeidung einer Farbveränderung des Kunststoffs mit einem eine äußere Schicht bildenden Überzug (7) aus lichtbeständigem und transparentem Kunststoff versehen ist.

2. Außenrückblickspiegel nach Anspruch 1,
**dadurch gekennzeichnet, daß** der Kunststoff des Spiegelgehäuses (3) ABS ist.

3. Außenrückblickspiegel nach Anspruch 1,
**dadurch gekennzeichnet, daß** der Kunststoff des Spiegelgehäuses (3) PBT ist.

4. Außenrückblickspiegel nach einem der Ansprüche 1 bis 3,
**dadurch gekennzeichnet, daß** der Überzug (7) aus UV-beständigem Material besteht.

5. Außenrückblickspiegel nach einem der Ansprüche 1 bis 4,
**dadurch gekennzeichnet, daß** der Überzug (7) aus Polycarbonat besteht.

6. Außenrückblickspiegel nach einem der Ansprüche 1 bis 5,
**dadurch gekennzeichnet, daß** der Überzug (7) aus PMMA besteht.

7. Außenrückblickspiegel nach einem der Ansprüche 1 bis 6,
**dadurch gekennzeichnet, daß** sich der Überzug (7) bis in die Innenseite des Spiegelgehäuses (3) erstreckt.

8. Außenrückblickspiegel nach einem der Ansprüche 1 bis 7,
**dadurch gekennzeichnet, daß** der Überzug (7) eine Dicke von etwa 1 mm hat.

9. Außenrückblickspiegel nach einem der Ansprüche 1 bis 8,
**dadurch gekennzeichnet, daß** der Spiegelfuß (1) aus einem Kunststoff besteht, der zumindest an seiner Außenseite mit einem Überzug aus lichtbeständigem Kunststoff versehen ist.

10. Außenrückblickspiegel nach Anspruch 9,
**dadurch gekennzeichnet, daß** der Überzug des Spiegelfußes (1) aus UV-beständigem Material, vorzugsweise Polycarbonat oder PMMA, besteht.

## Claims

1. A rear-view mirror for vehicles, preferably for motor vehicles, with a mirror base (1) which is provided with a mirror head (2) having a mirror housing in which a glass-support plate (4) is accommodated and which consists of coloured plastics material,
**characterised in that**, to prevent discolouration of the plastics material, at least the outside of the mirror housing (3) is provided with a coat (7) of a light-resistant and transparent plastics material forming an outer layer.

2. A rear-view mirror according to Claim 1,
**characterised in that** the plastics material of the mirror housing (3) is ABS.

3. A rear-view mirror according to Claim 1,
**characterised in that** the plastics material of the mirror housing (3) is PBT.

4. A rear-view mirror according to one of Claims 1 to 3,
**characterised in that** the coat (7) consists of UV-resistant material.

5. A rear-view mirror according to one of Claims 1 to 4,
**characterised in that** the coat (7) consists of polycarbonate.

6. A rear-view mirror according to one of Claims 1 to 5,
**characterised in that** the coat (7) consists of PMMA.

7. A rear-view mirror according to one of Claims 1 to 6,
**characterised in that** the coat (7) extends right into the inside of the mirror housing (3).

8. A rear-view mirror according to one of Claims 1 to 7,
**characterised in that** the coat (7) is about 1 mm thick.

9. A rear-view mirror according to one of Claims 1 to 8,
**characterised in that** the mirror base (1) consists of a plastics material which is provided at least on its outside with a coat of a light-resistant plastics material.

10. A rear-view mirror according to Claim 9,
**characterised in that** the coat of the mirror base (1) consists of UV-resistant material, preferably polycarbonate or PMMA.

## Revendications

1. Rétroviseur extérieur pour véhicules, de préférence pour véhicules à moteur, avec un pied de rétroviseur (1) qui est pourvu d'une tête de rétroviseur (2) possédant un boîtier de rétroviseur, dans lequel est logée une plaque porteuse de verre (4) et qui est réalisé en matière plastique teintée,
**caractérisé en ce qu'**au moins le côté extérieur du boîtier de rétroviseur (3) est, afin d'éviter une altération de la teinte de la matière plastique, pourvu d'un revêtement (7) en matière plastique transparente et résistante à la lumière, formant une couche extérieure.

2. Rétroviseur extérieur selon la revendication 1, **caractérisé en ce que** la matière plastique du boîtier de rétroviseur (3) est de l'ABS (acrylonitrile-butadiène-styrène).

3. Rétroviseur extérieur selon la revendication 1, **caractérisé en ce que** la matière plastique du boîtier de rétroviseur (3) est du PBT (polybutylène-téréphtalate).

4. Rétroviseur extérieur selon l'une des revendications 1 à 3,
**caractérisé en ce que** le revêtement (7) est constitué d'un matériau résistant aux UV (rayons ultraviolets).

5. Rétroviseur extérieur selon l'une des revendications 1 à 4,
**caractérisé en ce que** le revêtement (7) est constitué de polycarbonate.

6. Rétroviseur extérieur selon l'une des revendications 1 à 5,
**caractérisé en ce que** le revêtement (7) est constitué de PMMA (polyméthacrylate de méthyle).

7. Rétroviseur extérieur selon l'une des revendications 1 à 6,
**caractérisé en ce que** le revêtement (7) s'étend jusque dans le côté intérieur du boîtier de rétroviseur (3).

8. Rétroviseur extérieur selon l'une des revendications 1 à 7,
**caractérisé en ce que** le revêtement (7) possède une épaisseur d'environ 1 mm.

9. Rétroviseur extérieur selon l'une des revendications 1 à 8,
**caractérisé en ce que** le pied de rétroviseur (1) est constitué d'une matière plastique qui est pourvue au moins sur son côté extérieur d'un revêtement en matière plastique résistante à la lumière.

10. Rétroviseur extérieur selon la revendication 9, **caractérisé en ce que** le revêtement du pied de rétroviseur (1) est constitué d'un matériau résistant aux UV, de préférence du polycarbonate ou du PMMA.
